# EUROPEAN PATENT APPLICATION

(11) **EP 2 141 530 A1**
(43) Date of publication of application: **06.01.2010**
(21) Application number: 09007783.5
(22) Date of filing: 12.06.2009
(51) Int. Cl.: G02B 21/36

(54) **Microscope imaging apparatus and its system**

(30) Priority: 30.06.2008 JP 2008170117
(71) Applicant: Olympus Corporation, Shibuya-ku Tokyo 151-0072 (JP)
(72) Inventor: Fujiki, Hiroshi, Tokyo 151-0072 (JP)
(74) Representative: von Hellfeld, Axel

(57) **Abstract**

A microscope imaging apparatus (21) capable of communicating with a computer (22) includes a communication unit (13, 101) receiving imaging interval information transmitted from the computer, and a computer activation unit (5) activating the computer on a basis of the imaging interval information.

## Description

### Background of the Invention

### Field of the Invention

The present invention relates to a microscope imaging apparatus having a time-lapse function.

### Description of the Related Art

A microscope imaging apparatus is equipment for shooting a sample image of a microscope. In a biological study and a medical use, a sample image of a cell of a living body etc. can be shot. In an industrial use, a sample image of a substrate, a semiconductor, etc. can be shot. The captured sample image is commonly stored on a storage medium of a computer or edited. Therefore, the microscope imaging apparatus is provided as a system including a microscope and a computer in many cases.

The microscope imaging apparatus has the function referred to as time-lapse shooting (interval shooting) for observing the aging of a sample. In the time-lapse shooting, an operator first specifies a shooting interval. Each time the shooting interval passes, the microscope imaging apparatus shoots a sample. In the imaging apparatus having the above-mentioned time-lapse function, power is supplied even in a non-shooting period. There is a technique disclosed for saving electric power by stopping an unnecessary power supply to a circuit (for example, Japanese Laid-open Patent Publication No. 2007-158506, and Japanese Laid-open Patent Publication No. 9-197546).

The Japanese Laid-open Patent Publication No. 2007-158506 discloses an imaging apparatus for determining whether or not a power-saving mode is entered by stopping an unnecessary power supply to a circuit based on the change of the sample image. The imaging apparatus can switch from the time-lapse shooting to the power-saving mode after the passage of a predetermined time.

The Japanese Laid-open Patent Publication No. 9-197546 discloses an imaging apparatus for entering the power-saving mode by stopping the unnecessary supply of power to a circuit during the interval shooting, outputting a wakeup signal and performing a preparation for shooting, then outputting a release signal with shooting timing. Thus, the interval shooting can be performed with high accuracy regardless of the time required for the preparation for shooting.

### Summary of the Invention

The microscope imaging apparatus capable of communicating with a computer according to the embodiments of the present invention includes:
a communication unit receiving imaging interval information transmitted from the computer; and
a computer activation unit activating the computer on the basis of the imaging interval information.

In the microscope imaging system having a computer and a microscope imaging apparatus capable of communicating with the computer according to the embodiments of the present invention,
the microscope imaging apparatus includes:
a communication unit receiving imaging interval information transmitted from the computer;
a computer activation unit having a timer circuit for counting a predetermined time according to the imaging interval information and activating the computer after a passage of the counted time, in which:
   the computer transmits imaging interval information and a first command to enter a sleep mode;
   the microscope imaging apparatus receives the imaging interval information and the first command from the computer;
   the computer activation unit stops a supply of power to predetermined electronic parts configuring the microscope imaging apparatus excluding the timer circuit on the basis of the first command received after setting a predetermined time according to the received imaging interval information to the timer circuit, and notifies the computer of activation on the basis of the passage of the counted time;
   the computer receives the notification, releases a sleep mode and activates an operation, and transmits a second command after the activation;
   the microscope imaging apparatus receives the second command; and
   the computer activation unit resumes the supply of power to the electronic parts according to the second command.

### Brief Description of the Drawings

FIG. 1 illustrates the outline of the configuration of the microscope system according to an embodiment of the present invention;
FIG. 2 is a flowchart of the time-lapse shooting process of a host CPU 10 according to an embodiment of the present invention;
FIG. 3 is a timing chart of the operation according to an embodiment of the present invention;
FIG. 4 is a flowchart of the time-lapse shooting process (a) of a program 11 according to an embodiment of the present invention;
FIG. 5 is a flowchart of the time-lapse shooting process (b) of a program 11 according to an embodiment of the present invention;
FIG. 6 illustrates the outline of the configuration of the microscope system according to an embodiment (variation example) of the present invention;
FIG. 7 is a flowchart of the time-lapse shooting process of the host CPU 10 according to an embodiment (variation example) of the present invention;
FIG. 8 is a timing chart of the operation according to an embodiment (variation example) of the present invention; and
FIG. 9 is a flowchart of the time-lapse shooting process (c) of the program 11 according to an embodiment (variation example) of the present invention.

### Description of the preferred Embodiments

Japanese Laid-open Patent Publication No. 2007-158506 regards the configuration of a camera and its control box as a target of a power-saving mode. Japanese Laid-open Patent Publication No. 9-197546 regards the configuration of a camera and an accessory for outputting a release signal as a target of a power-saving mode. Therefore, since the entire system of the microscope imaging apparatus including a computer is not regarded as a target of the power-saving mode, the reduction of power consumption can be realized only on the image pickup element and its peripheral circuit.

Therefore, the embodiments of the present invention provide a microscope imaging apparatus capable of repeatedly acquiring images at desired shooting intervals and saving power on the entire system including a computer.

The microscope imaging apparatus capable of communicating with a computer according to the embodiments of the present invention includes a communication unit and a computer activation unit. The microscope imaging apparatus capable of communicating with a computer can be, for example, a camera unit 21 capable of communicating with a host unit 22 according to the embodiments of the present invention.

A communication unit receives imaging interval information transmitted from the computer. The communication unit corresponds to, for example, a PCI Express interface 13 or an Ethernet controller 101 according to an embodiment of the present invention.

The computer activation unit activates the computer according to the imaging interval information. The computer activation unit includes a timer circuit for counting a predetermined time according to the imaging interval information. The timer circuit can be driven by a bus standby power supply. The timer circuit corresponds to, for example, a timer circuit 5a according to an embodiment of the present invention. The computer activation unit can change the timing of activating the computer depending on the imaging preparation time. The imaging preparation time includes the time required to supply power to the microscope imaging apparatus and the time required to cool the image pickup element. The computer activation unit corresponds to, for example, a system control unit 5 according to an embodiment of the present invention.

With the above-mentioned configuration, the power saving can be realized on the entire system including the computer by waking up the computer from the microscope imaging apparatus. In addition, by driving the timer circuit by the above-mentioned bus standby power supply, the power saving can be realized on the entire system including the computer without an external power supply or backup battery.

Described below in detail are the embodiments of the present invention.

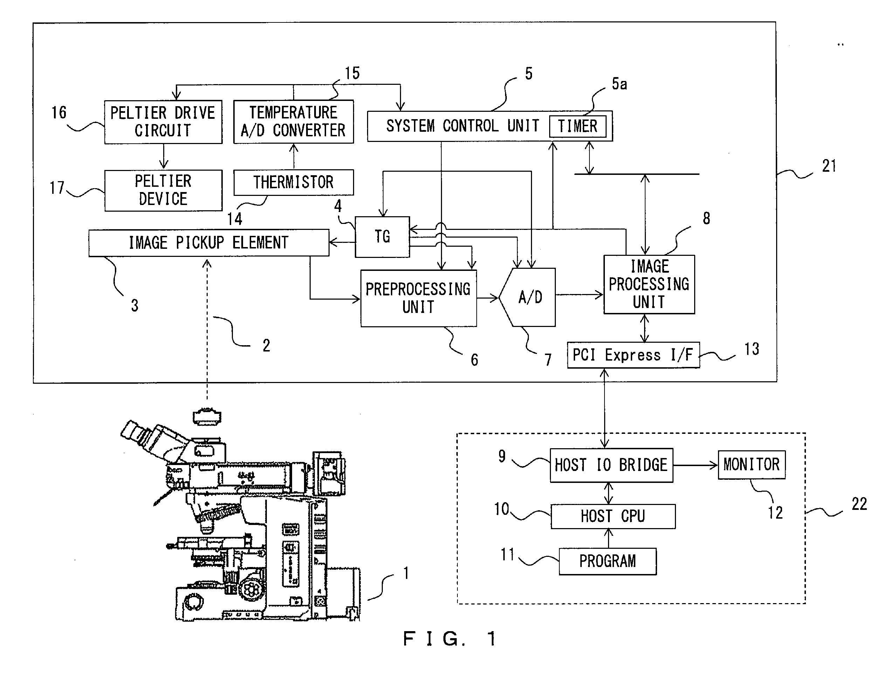

FIG. 1 illustrates the outline of the configuration of the microscope system according to an embodiment of the present invention. The microscope system is configured by a microscope 1, a camera unit 21, and a host unit 22. A sample not illustrated in the attached drawings is placed on the stage of the microscope 1, and can be observed by the microscope 1. The observed image of the sample is projected by an image pickup element 3 through an optical path 2, and output as an electric signal from the image pickup element 3.

The camera unit 21 includes the image pickup element 3, a TG 4, the system control unit 5, a preprocessing unit 6, an A/D converter 7, an image processing unit 8, the PCI Express I/F 13, an image pickup element thermistor 14, a temperature A/D converter 15, a Peltier drive circuit 16, and a Peltier device 17.

The TG 4 is a pulse generator for generating driving timing of the image pickup element 3 and the A/D converter 7. The image pickup element 3 exposes the observed image of a sample, and outputs an electric signal of each pixel. The preprocessing unit 6 converts an output signal from the image pickup element 3 into an analog image signal. The A/D converter 7 converts the analog image signal into a digital image signal.

The image processing unit 8 is an image processing IC for converting the digital image signal from a pixel format of an image pickup element such as a Bayer array into a format such as RGB etc. , performing image processing such as a white balance, a color correction, a gray-scale correction, etc., and outputting an image signal to the PCI Express interface (hereinafter an interface is referred to as an I/F) 13. The image processing unit 8 generates a horizontal synchronization signal and a vertical synchronization signal, and outputs them to the TG 4 and the system control unit 5.

The PCI Express I/F 13 is a PCI Express interface device for outputting an image signal from the image processing unit 8 to a host IO bridge 9. The host IO bridge 9 is an IO controller for transferring the image signal from the PCI Express I/F 13 to graphics controller memory (not illustrated in the attached drawings) by a DMA transfer etc., and displaying the signal on a monitor 12.

The image pickup element thermistor 14 is attached to the vicinity of the image pickup element 3, and outputs a voltage depending on the temperature of the image pickup element 3. The temperature A/D converter 15 converts an analog voltage value from the image pickup element thermistor 14 into the image pickup element temperature of a digital signal.

The Peltier drive circuit 16 passes a drive current to the Peltier device 17 according to the current value set by the system control unit 5. The Peltier device 17 cools the image pickup element 3 depending on the drive current.

The system control unit 5 is a microcontroller for controling the TG 4, the image pickup element 3, the A/D converter 7, the image processing unit 8, the temperature A/D converter 15, and the Peltier drive circuit 16. The system control unit 5 has the timer circuit 5a.

The host IO bridge 9 can drive the system control unit 5 by the standby power supply Vaux of the PCI Express connector not illustrated in the attached drawings. The output port of the 5 is not illustrated in the attached drawings, but is connected to the host IO bridge 9 through a WAKE # pin of the PCI Express connector.

The host unit 22 includes the host IO bridge 9, the host CPU 10, the program 11, and the monitor 12. The program 11 is stored in the storage device (not illustrated in the attached drawings) of the host unit 22.

The host CPU 10 controls the host IO bridge 9 and executes the program 11 stored in a storage medium not illustrated in the attached drawings. The operator shoots a sample image and stores and edits the sample image by operating the GUI displayed on the monitor 12.

The host CPU 10 reads the program 11 from the storage device. The host CPU 10 transmits a command to the system control unit 5 and controls the camera unit 21 through the host IO bridge 9 and the PCI Express I/F 13 on the basis of the program 11.

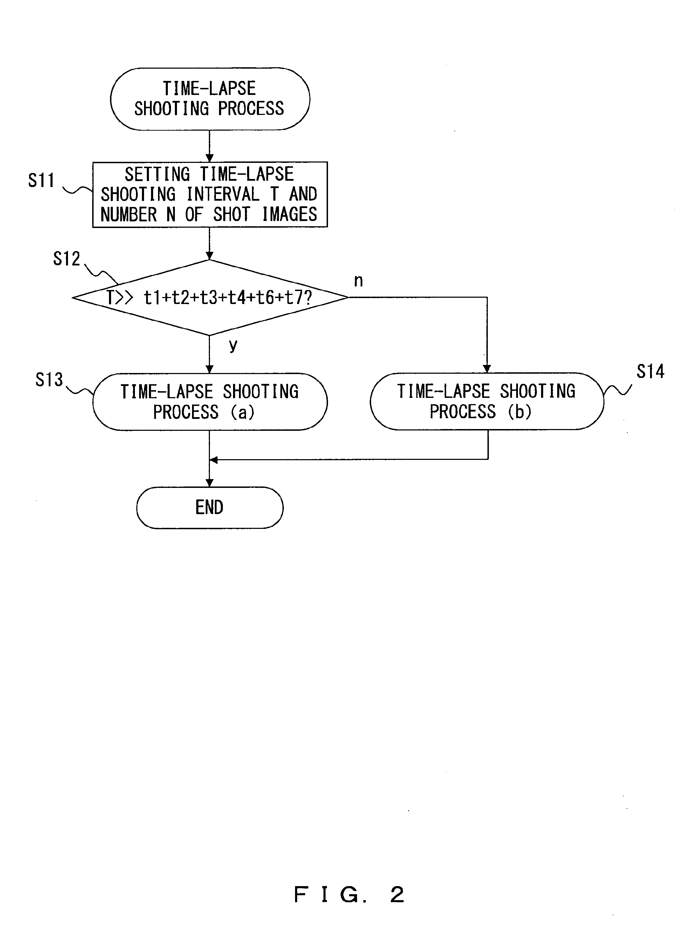

FIG. 2 is a flowchart of the time-lapse shooting process of a host CPU 10 according to an embodiment of the present invention. When the power supply of the host unit 22 is turned on, the host unit 22 is activated. The host CPU 10 develops on the memory the program 11 according to an embodiment of the present invention stored in the storage device (not illustrated in the attached drawings), and reads the program. The host CPU 10 performs the following process on the basis of the program 11.

The operator sets the time-lapse shooting interval T and the number N of shot images using the input device (not illustrated in the attached drawings) of the host unit 22, and starts the time-lapse shooting (S11).

The program 11 determines whether or not T is sufficiently longer than t1 + t2 + t3 + t4 + t6 + t7 (S12). The t1, t2, t3, t4, t6, and t7 are described later. When T is sufficiently longer than t1 + t2 + t3 + t4 + t6 + t7, the program 11 performs the time-lapse shooting process (a) (S13). Otherwise, the program 11 performs the time-lapse shooting process (b) (S14).

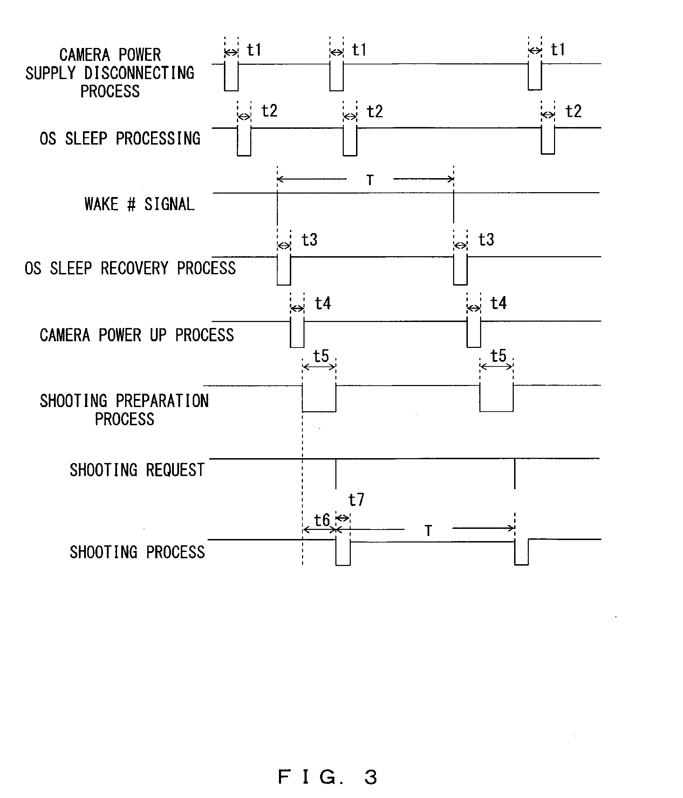

FIG. 3 is a timing chart of the operation according to an embodiment of the present invention. t1 refers to the time required by the program 11 to disconnect the power supply of the camera unit 21. t2 refers to the time required by the program 11 to transfer the host unit 22 into the sleep mode through the operating system (hereinafter referred to as an OS). t3 refers to the time required to recover the OS from the sleep mode and develop the program 11 on the memory. t4 refers to the time required by the program 11 to power up the camera unit 21. t5 refers to the time required by the program 11 to prepare for a shooting operation. t6 refers to the shooting preparation time sufficiently longer than t5. t7 refers to the time required to perform the shooting process.

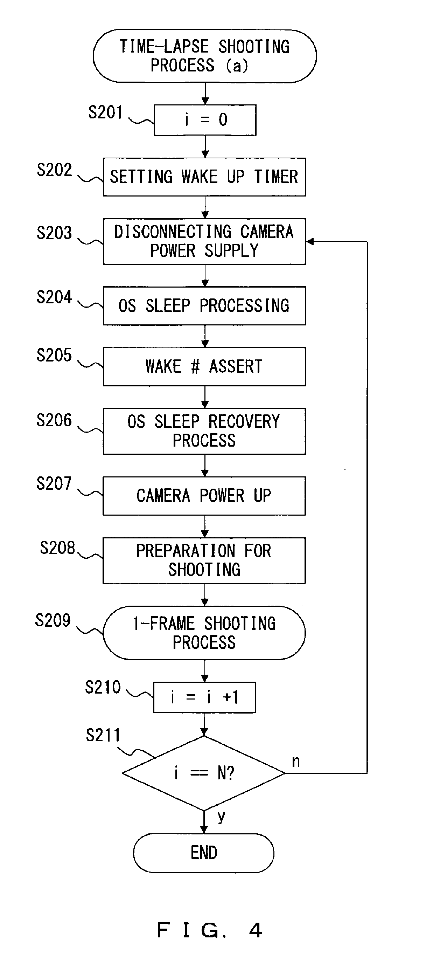

FIG. 4 is a flowchart of the time-lapse shooting process (a) of the program 11 according to an embodiment of the present invention. The program 11 initializes the shot image counter i to 0 (S201).

The program 11 transmits a wakeup timer set command to the system control unit 5 (S202). Then, the system control unit 5 sets the time-lapse shooting interval T as a wakeup timer period T.

The program 11 transmits a camera power supply disconnect command to the system control unit 5 (S203). The system control unit 5 disconnects the power supply to the TG 4, the image pickup element 3, the A/D converter 7, the image processing unit 8, the temperature A/D converter 15, and the Peltier drive circuit 16 to disconnect the power supply to the camera unit 21. The system control unit 5 enters the power-saving mode in which at least the timer circuit 5a can be driven, and starts counting the wakeup timer T.

The program 11 allows the host unit 22 to enter the sleep mode by controlling the application programming interface provided by the OS (S204). The host unit 22 transfers to the sleep status defined by, for example, the ACPI (Advanced Configuration and Power Interface) standard. In this case, the host IO bridge 9 and the host CPU 10 transfer to the power-saving status, and the power supply to the peripheral devices is disconnected. The program 11 is saved on the storage medium such as an HDD (hard disk drive) etc. The main supply of the PCI Express bus is disconnected, and only the power supply of a small capacity about 300 (mA) is provided by an added power supply Vaux.

When the wakeup timer T counts down to 0, the system control unit 5 recovers from the power-saving mode. Furthermore, the system control unit 5 asserts the WAKE# pin of the PCI Express connector (S205).

When the WAKE# pin is asserted, the host IO bridge 9 notifies the host CPU 10 of the release of the standby mode. The OS resumes the power supply to peripheral devices, and releases the standby mode. The program 11 is read by the OS from a storage medium such as an HDD etc. and developed on the memory, and the execution of the program is resumed (S206).

The program 11 transmits a camera power-up command to the system control unit 5. The system control unit 5 resumes the power supply to the TG 4, the image pickup element 3, the A/D converter 7, the image processing unit 8, the temperature A/D converter 15, and the Peltier drive circuit 16, and powers up the camera unit 21 (S207).

The program 11 defines t6 as a shooting preparation timer, and starts counting. The program 11 performs a preparation for shooting (S208). In this case, the program 11 sets shooting parameters such as a desired number of pixels, a pixel format, exposure time, ISO sensitivity, a gray-scale correction level, etc. Furthermore, the system control unit 5 drives the Peltier drive circuit 16 to cool the image pickup element 3 down to a target temperature.

When the shooting timer t6 counts down to 0, the program 11 transmits a shooting start command to the system control unit 5. The system control unit 5 controls the TG 4, the A/D converter 7, and the image processing unit 8 to perform the shooting process (S209). The program 11 acquires a sample image through the PCI Express I/F 13 and the host IO bridge 9. The program 11 stores the sample image on a storage medium such as an HDD etc.

The program 11 increments the shot image counter i to i+1 (S210). The program 11 terminates the time-lapse shooting process (a) if the shot image counter i equals N. If the shot image counter i does not equal N, control is returned to S203 to perform a subsequent shooting operation (S211).

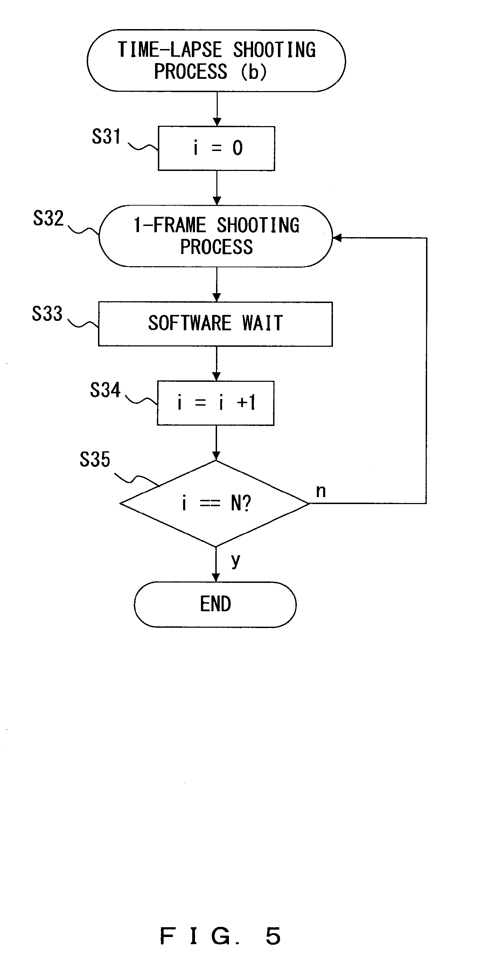

FIG. 5 is a flowchart of the time-lapse shooting process (b) of a program 11 according to an embodiment of the present invention. The program 11 initializes the shot image counter i to 0 (S31).

The program 11 transmits a shoot command to the system control unit 5. The system control unit 5 controls the TG 4, the A/D converter 7, and the image processing unit 8 to perform the shooting process (S32). The program 11 acquires a sample image through the image pickup element 3 and the host IO bridge 9. The program 11 stores the sample image on a storage medium such as an HDD etc.

The program 11 waits for T (ms) by a software timer (S33).

The program 11 increments the shot image counter i to i+1 (S34).

The program 11 terminates the time-lapse shooting process (b) if the shot image counter i equals N. If the shot image counter i does not equal N, control is returned to S32, and the next shooting process is performed (S35).

As described above, an imaging apparatus for repeatedly acquiring images at desired shooting intervals can realize power saving on the entire system including the computer.

In addition, since the system control unit 5 receives power supply from the added power supply Vaux of the PCI Express connector, the unit can recover from the sleep mode without any special external power supply or backup power supply.

Furthermore, although the shooting preparation time t6 is a fixed time according to the present embodiment, but the shooting preparation time t6 can be changed by the settings of the program 11. Thus, the shooting preparation time can include the lighting of a microscope, stage control, or the time required for focus control, and a high-quality sample image can be obtained while performing a high-accuracy time-lapse shooting process.

### (Variation Example)

In the above-mentioned embodiments, the data transfer unit is a PCI Express interface, but the present invention is not limited to this configuration. For example, the above-mentioned embodiment can be realized so far as the interface has the wakeup function, and therefore any other interfaces of a LAN, a PCI, etc. can be used. Described below is a case in which Ethernet is used as an interface as a variation example.

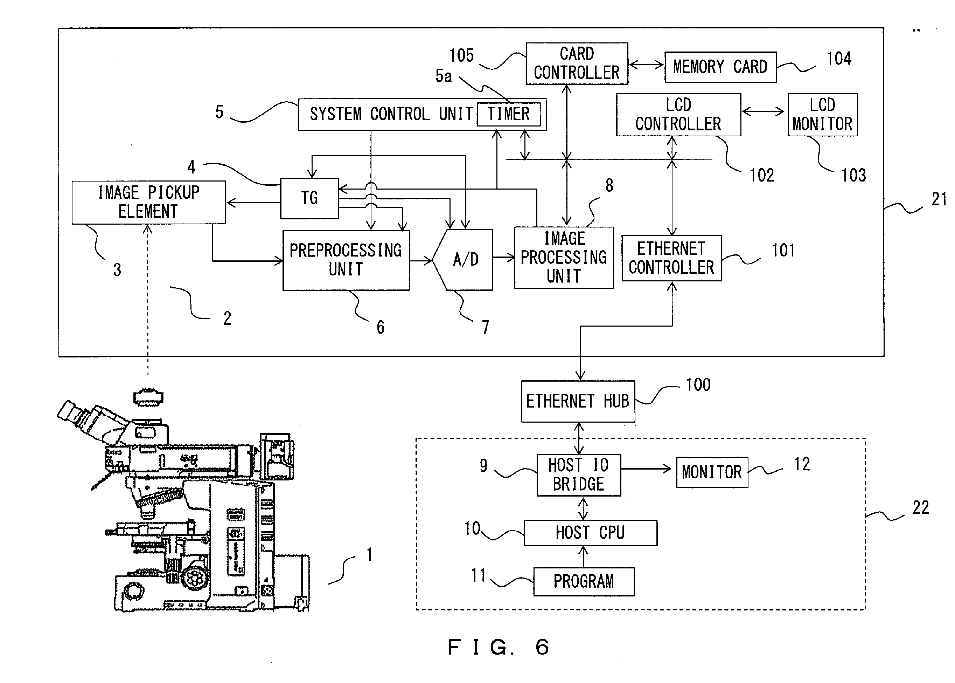

FIG. 6 illustrates the outline of the configuration of the microscope system according to an embodiment (variation example) of the present invention. The components also illustrated in FIG. 1 are assigned the same reference numerals. In FIG. 6, the camera unit 21 has the image pickup element 3, the TG 4, the system control unit 5, the preprocessing unit 6, the A/D converter 7, the image processing unit 8, the Ethernet controller 101, an LCD controller 102, an LCD monitor 103, a memory card 104, and a card controller 105.

The camera unit 21 is connected to an Ethernet HUB 100 through the Ethernet controller 101. The host unit 22 is connected to the Ethernet HUB 100 through the Ethernet controller 101 not illustrated in the attached drawings but built in the host IO bridge 9.

The operator specifies an IP address of the camera unit 21 using an input device for the GUI displayed on the monitor 12. The host unit 22 controls the camera unit 21 by transmitting a command for control of the power supply of the camera unit 21 and a shoot instruction command to the camera unit 21 through the Ethernet. In addition, the host unit 22 can receive an image signal from the camera unit 21 through Ethernet.

The card controller 105 is a memory card controller connected to the system control unit 5. The memory card 104 is a memory card such as an SD card connected to the card controller 105, and can store a sample image.

The LCD controller 102 is a display controller connected to the system control unit 5. The LCD monitor 103 is a touch panel connected to the LCD controller 102, and can display a sample image and set the camera unit 21 by a GUI.

The operator operates the GUI of the LCD monitor 103 and sets the IP address of the camera unit 21 and the physical address of the host unit 22. The IP address of the camera unit 21 and the physical address of the host unit 22 are stored in the non-volatile memory (not illustrated in the attached drawings) of EEPROM etc. connected to the system control unit 5.

The camera unit 21 is driven by an independent power supply not illustrated in the attached drawings, and requires no power supply from the host unit 22. Otherwise, it is the same as the case illustrated in FIG. 1.

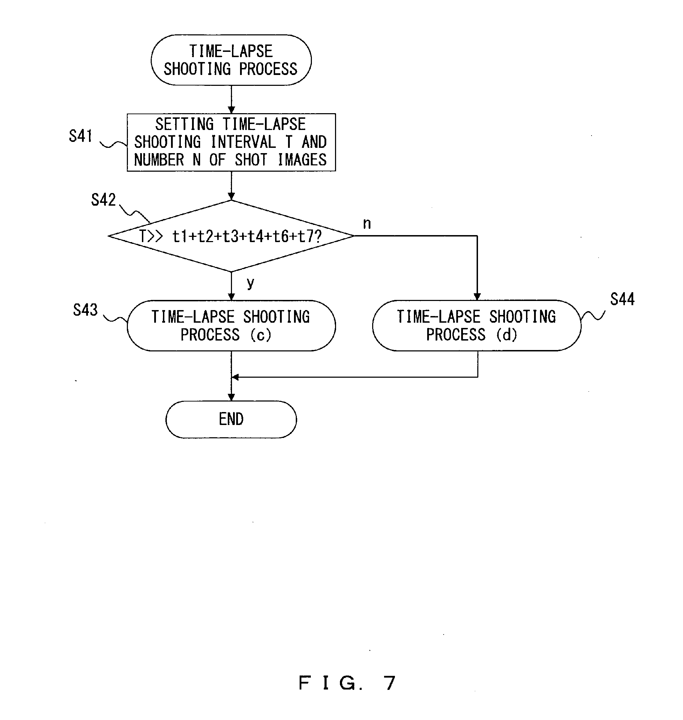

FIG. 7 is a flowchart of the time-lapse shooting process of a host CPU 10 according to an embodiment (variation example) of the present invention. When the power supply of the host unit 22 is turned on, the host unit 22 is activated. The host CPU 10 develops on the memory the program 11 according to an embodiment of the present invention stored in the storage device (not illustrated in the attached drawings), and reads the program. The host CPU 10 performs the following process on the basis of the program 11.

The operator sets the time-lapse shooting interval T and the number N of shot images using the input device (not illustrated in the attached drawings) of the host unit 22, and starts the time-lapse shooting (S41).

The program 11 determines whether or not T is sufficiently longer than t1 + t2 + t3 + t4 + t6 + t7 (S42). When T is sufficiently longer than t1 + t2 + t3 + t4 + t6 + t7, the program 11 performs the time-lapse shooting process (c) (S43). Otherwise, the program 11 performs the time-lapse shooting process (d) (S44).

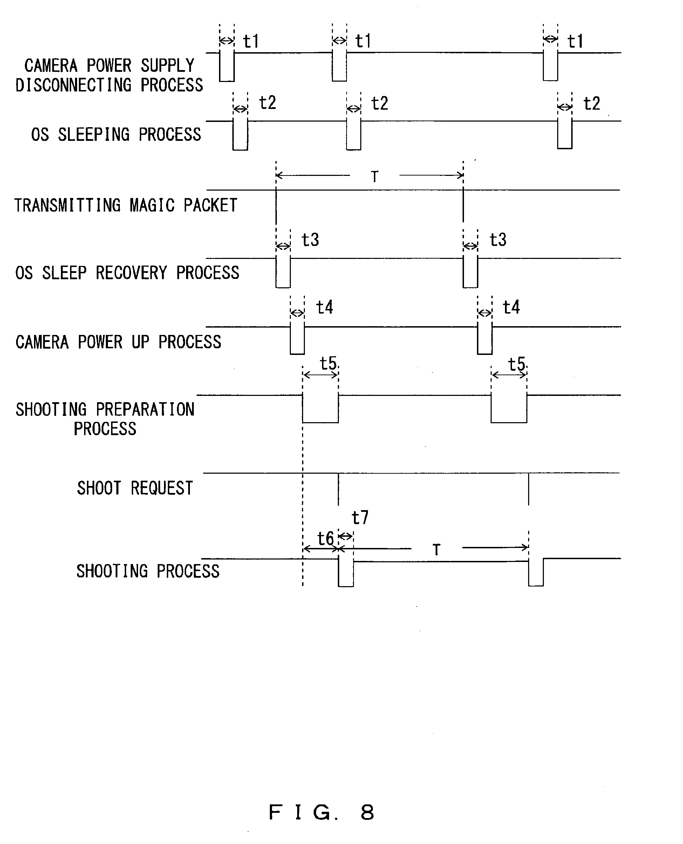

FIG. 8 is a timing chart of the operation according to an embodiment of the present invention (variation example). t1 refers to the time required by the program 11 to disconnect the power supply of the camera unit 21. t2 refers to the time required by the program 11 to transfer the host unit 22 into the sleep mode through the operating system (hereinafter referred to as an OS). t3 refers to the time required to recover the OS from the sleep mode and develop the program 11 on the memory. t4 refers to the time required by the program 11 to power up the camera unit 21. t5 refers to the time required by the program 11 to prepare for a shooting operation. t6 refers to the shooting preparation time sufficiently longer than t5. t7 refers to the time required to perform the shooting process.

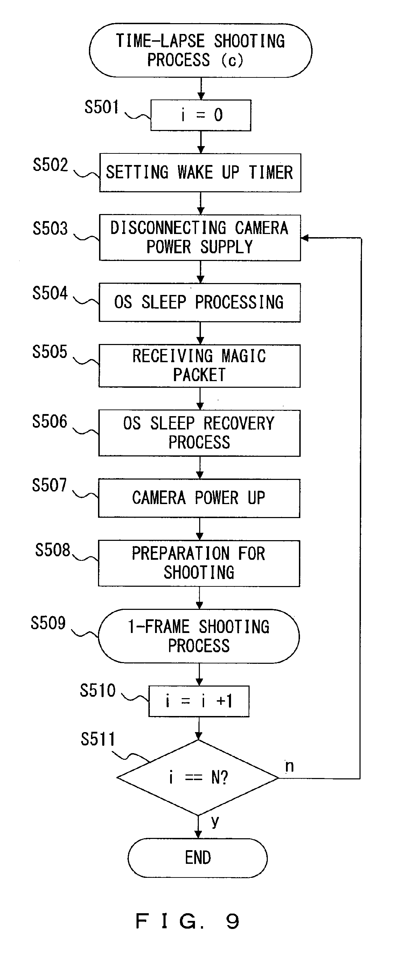

FIG. 9 is a flowchart of the time-lapse shooting process (c) of the program 11 according to an embodiment (variation example) of the present invention. The program 11 initializes the shot image counter i to 0 (S501).

The program 11 transmits a command to the system control unit 5, and sets a wakeup timer period T and a shooting timer t6 (S502).

The program 11 transmits a camera power supply disconnect command to the system control unit 5. The system control unit 5 disconnects the power supply to the TG 4, the image pickup element 3, the A/D converter 7, and the image processing unit 8 to disconnect the power supply to the camera unit 21. The system control unit 5 enters the power-saving mode in which at least the timer circuit 5a can be driven, and starts counting the wakeup timer T (S503).

The program 11 allows the host unit 22 to enter the sleep mode by controlling the application programming interface provided by the OS. The host unit 22 transfers to the sleep status defined by, for example, the ACPI (Advanced Configuration and Power Interface) standard. In this case, the host IO bridge 9 and the host CPU 10 transfer to the power-saving status, and the power supply to the peripheral devices is disconnected. The program 11 is saved on the storage medium such as an HDD etc. (S504).

When the wakeup timer T counts down to 0, the system control unit 5 recovers from the power-saving mode. Furthermore, the system control unit 5 transmits a MAGIC packet to the host unit 22 through the Ethernet controller 101 on the basis of the physical address of the host unit 22 read from the non-volatile memory not illustrated in the attached drawings. The host unit 22 receives the MAGIC packet (S505).

Upon receipt of the MAGIC packet, the host IO bridge 9 notifies the host CPU 10 of the release of the standby mode. The OS resumes the power supply to peripheral devices, and releases the standby mode. The program 11 is read by the OS from a storage medium such as an HDD etc. and developed on the memory, and the execution of the program is resumed (S506).

The program 11 transmits a camera power-up command to the system control unit 5. The system control unit 5 resumes the power supply to the TG 4, the image pickup element 3, the A/D converter 7, and the image processing unit 8, and powers up the camera unit 21 (S507).

The program 11 defines t6 as a shooting preparation timer, and starts counting. The program 11 performs a preparation for shooting (S508). In this case, the program 11 sets shooting parameters such as a desired number of pixels, a pixel format, exposure time, ISO sensitivity, a gray-scale correction level, etc.

When the shooting timer t6 counts down to 0, the program 11 transmits a shooting start command to the system control unit 5. The system control unit 5 controls the TG 4, the A/D converter 7, and the image processing unit 8 to perform the shooting process (S509). The program 11 acquires a sample image through the Ethernet HUB 100 and the host IO bridge 9. The program 11 stores the sample image on a storage medium such as an HDD etc.

The program 11 increments the shot image counter i to i+1 (S510). The program 11 terminates the time-lapse shooting process (c) if the shot image counter i equals N. If the shot image counter i does not equal N, control is returned to S503 to perform a subsequent shooting operation (S511).

The time-lapse shooting process (d) of the program 11 is the same as the case illustrated in FIG. 5.

As described above, in the imaging apparatus for repeatedly acquiring images at desired shooting intervals, power can be saved on the entire system including a computer. Although a computer is separated from a microscope imaging apparatus to cut off vibrations or light or maintain a constant peripheral temperature, power can be saved on the entire system including a computer.

In the above-mentioned embodiments of the present invention, the system control unit 5 stops/resumes the power supply to predetermined electronic parts in the TG 4, the image pickup element 3, the A/D converter 7, the image processing unit 8, the temperature A/D converter 15, and the Peltier drive circuit 16 on the basis of the camera power supply disconnect command/camera power-up command. However, the stop of power supply is not limited to the predetermined electronic parts in the TG 4, the image pickup element 3, the A/D converter 7, the image processing unit 8, the temperature A/D converter 15, and the Peltier drive circuit 16, but the power supply can be stopped for the electronic parts other than the above-mentioned electronic parts depending on the configuration of the camera unit 21.

The imaging apparatus which is connected to a bus having the function of waking up a computer from a connected device and repeatedly obtains images at desired shooting intervals according to the embodiments of the present invention can wake up the computer depending on the shooting intervals. Thus, power can be saved on the entire system including a computer by waking up the computer from the microscope imaging apparatus.

In addition, the microscope imaging apparatus is provided with a timer circuit driven by a standby power supply of a bus. The timer circuit can wake up a computer depending on the shooting intervals. Thus, by driving the timer circuit by the standby power supply of the bus, power can be saved on the entire system including a computer. without an external power supply or backup battery.

Furthermore, the timing of waking up a computer can be changed depending on the imaging preparation time. By waking up the computer depending on the shooting preparation time, power can be saved on the entire system including a computer, and a high quality sample image can be obtained while performing time-lapse shooting with high accuracy.

According to the present invention, power can be saved on the entire system including a computer in the microscope imaging apparatus for repeatedly acquiring images at desired shooting intervals.

The present invention is not limited to the above-mentioned embodiments but can be realized by various configurations or embodiments within the gist of the present invention.

## Claims

1. A microscope imaging apparatus (21) capable of communicating with a computer (22), comprising:
a communication unit (13, 101) receiving imaging interval information transmitted from the computer; and
a computer activation unit (5) activating the computer on a basis of the imaging interval information.

2. The apparatus according to claim 1, wherein
the computer activation unit (5) comprises a timer circuit (5a) counting a predetermined time according to the imaging interval information.

3. The apparatus according to claim 2, wherein
the timer circuit (5a) is driven by bus standby power supply.

4. The apparatus according to claim 3, wherein
the computer activation unit (5) changes timing of activating the computer depending on imaging preparation time.

5. The apparatus according to claim 4, wherein
the imaging preparation time includes time required to supply power to the microscope imaging apparatus (21) and cool an image pickup element.

6. The apparatus according to claim 5, wherein
the communication unit is a PCI Express interface (13) or an Ethernet controller (101).

7. A microscope imaging system having a computer (22) and a microscope imaging apparatus (21) capable of communicating with the computer,
the microscope imaging apparatus (21) comprising:
a communication unit (13, 101) receiving imaging interval information transmitted from the computer;
a computer activation unit (5) having a timer circuit (5a) for counting a predetermined time according to the imaging interval information and activating the computer after a passage of the counted time, wherein: the computer (22) transmits imaging interval information and a first command to enter a sleep mode;
the microscope imaging apparatus (21) receives the imaging interval information and the first command from the computer;
the computer activation unit (5) stops a supply of power to predetermined electronic parts (3, 4, 7, 8, 15, 16) configuring the microscope imaging apparatus (21) excluding the timer circuit (5a) on a basis of the first command received after setting a predetermined time according to the received imaging interval information to the timer circuit, and notifies the computer (22) of activation on a basis of the passage of the counted time;
the computer (22) receives the notification, releases a sleep mode and activates an operation, and transmits a second command after the activation;
the microscope imaging apparatus (21) receives the second command; and
the computer activation unit (5) resumes the supply of power to the electronic parts (3, 4, 7, 8, 15, 16) according to the second command.
